Europäisches Patentamt

European Patent Office

Office européen des brevets

(19)

(11) Publication number : **0 364 471 B1**

# EUROPEAN PATENT SPECIFICATION

(12)

(45) Date of publication of patent specification :
**12.02.92 Bulletin 92/07**

(51) Int. Cl.⁵ : **B60T 11/16,** B60T 11/26,
F15B 7/00, F16D 25/14

(21) Application number : **88904599.3**

(22) Date of filing : **06.06.88**

(86) International application number :
**PCT/GB88/00440**

(87) International publication number :
**WO 88/09734 15.12.88 Gazette 88/27**

(54) **A HYDRAULIC ACTUATOR FOR CONNECTION TO A RESERVOIR.**

(30) Priority : **04.06.87 US 58189**

(43) Date of publication of application :
**25.04.90 Bulletin 90/17**

(45) Publication of the grant of the patent :
**12.02.92 Bulletin 92/07**

(84) Designated Contracting States :
**DE FR GB IT**

(56) References cited :
**EP-A- 0 146 283
CH-A- 318 678
DE-A- 3 718 698
FR-A- 2 367 640
US-A- 4 599 860**

(73) Proprietor : **AUTOMOTIVE PRODUCTS PLC
Tachbrook Road
Leamington Spa Warwickshire CV31 3ER (GB)**

(72) Inventor : **LEIGH-MONSTEVENS, Keith,
Vernon
5622 Larkins Drive
Troy, MI 49098 (US)**

(74) Representative : **Adkins, Michael et al
Withers & Rogers 4 Dyer's Buildings
Holborn London, EC1N 2JT (GB)**

# Description

This invention relates to a hydraulic actuator system for a motor vehicle. More particularly but not exclusively the invention relates to a pre-assembled and pre-filled hydraulic clutch actuator system which can be connected to a fluid reservoir.

Hydraulic actuators are known for operating motor vehicle clutches and other mechanism at a remote location by way of a master cylinder and slave cylinder combination. The master cylinder is operated, for example, by the clutch pedal, and the slave cylinder is connected to the clutch via a throwout bearing. The master and slave cylinders are interconnected by a high-pressure line or conduit. Depressing the clutch pedal displaces the piston in the master cylinder to close a passage or port between the master cylinder fluid chamber and a fluid reservoir, and to pressurize the connection to the slave cylinder. Displacement of the piston in the slave cylinder disengages the clutch.

It is also known to pre-assemble and pre-fill apparatus of this type before shipment of the assembly to a motor vehicle manufacturer for installation on the motor vehicle. The motor vehicle manufacturer need only fix the master and slave cylinders in place and make simple mechanical connections to the clutch pedal and clutch bearing. In that respect reference is made to our U.S. Patent No.4,599.860 "Liquid Pressure Apparatus".

The hydraulic system shown in the aforementioned Patent discloses a fluid reservoir which is integral with the master cylinder and which is dedicated exclusively to the clutch actuator. Pre-filled and pre-assembled hydraulic actuator apparatus of this type have achieved wide acceptance, particularly in the automotive industry, because of the ease of installation in the motor vehicle, because of their extremely reliable operation over long periods of time and because of their ability to automatically compensate for wear.

There are situations in which it is desirable to employ such pre-filled hydraulic actuator apparatus in a system utilizing a detached reservoir; such a reservoir may, for example, supply fluid both to the pre-assembled and pre-filled clutch actuator and to another system on the vehicle such as the brake system.

This invention includes but is not limited to the provision of a pre-assembled and pre-filled motor vehicle clutch hydraulic actuator assembly suitable for use with a detached reservoir; i.e., a reservoir which is not shipped or installed as an integral unit of the clutch actuator assembly.

According to a first aspect of the invention there is provided a method of providing a hydraulic actuator assembly in a motor vehicle comprising the steps of installing in the motor vehicle a reservoir having an outlet port, installing in the motor vehicle a hydraulic master cylinder having an outlet for connection to a slave cylinder through a working fluid conduit and an inlet port for connection to the outlet port of the reservoir, providing supply conduit means to establish fluid communication between said ports, said supply conduit means including sealing means for sealing a free end thereof, and connecting said supply conduit means between the inlet and outlet ports so as to cause the sealing means to open and permit fluid in the reservoir to communicate between the ports.

Preferably the method includes pre-filling the master cylinder, working fluid conduit and slave cylinder with hydraulic fluid to form a sub-assembly for connection to the reservoir. The supply conduit may also be pre-filled. In this case the invention provides a pre-assembled and pre-filled combination of a master cylinder and slave cylinder interconnected by means of a high-pressure working fluid line. In addition, the combination comprises pre-filled low pressure supply conduit means connected between the supply inlet of the master cylinder and the outlet of a remote reservoir. Through this arrangement, the pre-filled supply conduit means can be connected between the remote reservoir and the master cylinder without concern for the admission of a small amount of air to the supply, since it is already at atmospheric pressure. This invention provides the advantage of the pre-filled system of U.S. Patent No.4,599,860 but has the further advantage of being compatible with multipleuse, non-integral fluid reservoirs.

The method may include providing said supply conduit means as a supply conduit sealingly connected at one end to one of said ports and sealed at its other free end and establishing communication between said ports by connecting said free end of said supply conduit to the other of said ports. Preferably, said free end of said supply conduit is sealed by a coupling and the coupling operates to open the free end of the supply conduit in response to connection of the coupling to said other port. Preferably the other port is closed prior to connection of said coupling thereto and said coupling also operates to open said other port in response to connection of a coupling to said other port.

Said one port may be the said master cylinder port and the other said port the reservoir port. Alternatively said one port is said reservoir port and the other port is said master cylinder port.

The method may be characterised by providing said supply conduit means as a first supply conduit sealingly connected at one end to said master cylinder input port and sealed at its other free end and a second supply conduit sealingly connected at one end to said reservoir outlet port and sealed at its other free end and establishing fluid communication between said ports by connecting together the free ends of said first and second supply conduits.

Alternatively the method may be characterised by providing said supply conduit means as a supply conduit sealingly connectable at one end to said reservoir port and sealingly connectable at its other end to said master cylinder port and establishing fluid communication between said ports by connecting the free ends of the conduit to the respective ports. This method may include providing a coupling member on each end of the supply conduit, the coupling members being normally operative to seal the free ends of the conduit but operative in response to connection of the free ends to open the free ends and provide fluid communication therethrough.

Preferably, the method includes causing the sealing means to open simultaneously with the connecting of the free end to establish said fluid communication between the ports. In such a case, the sealing means may be frangible so as to rupture during connection of the supply conduit means to establish said fluid communication, or formed in part of a quick-connect self sealing connector which includes self sealing valve means. This arrangement allows, for example, the reservoir to be constructed with a frangible bung partition which seals the reservoir prior to installation of the pre-assembled and pre-filled hydraulic actuating apparatus and which is broken in response to connection of the conduit of the pre-filled apparatus to the reservoir outlet fitting to provide fluid communication between the pre-filled reservoir and the pre-filled hydraulic actuating apparatus.

The method may include filling the master cylinder, slave cylinder and working fluid conduit, the method further includes pre-filling the supply conduit means.

The method may also include providing said reservoir as a common reservoir which also serves as a reservoir for another hydraulic system of the vehicle, e.g., the motor vehicle brake system. In that way the method will be installed in the vehicular assembly process, the brake system bled and filled including filing the reservoir, and the pre-filled hydraulic actuating apparatus thereafter installed in the vehicle with the coupling means on the free end of the supply conduit extending from the master cylinder operating upon connection of the free end to the reservoir to open the seal in the free end of the conduit to provide fluid communication between the pre-filled reservoir and the pre-filled hydraulic actuating apparatus.

According to another aspect of the invention there is provided hydraulic apparatus for assembly into the vehicle according to the method of said first aspect of the invention or any of the consistory clauses relating thereto, the hydraulic apparatus comprising a hydraulic master cylinder having an outlet for connection to slave cylinder through a working fluid conduit and an inlet port for connection through supply conduit means to an outlet of a reservoir, said supply conduit means including sealing means for sealing a free end thereof which sealing means permits fluid in the reservoir to communicate between the ports when the supply conduit means is connected between the inlet and outlet ports.

Where a frangible sealing means is provided, the sealing means may be rupturable during connecting of said free end by a coupling to establish said fluid communication between the ports.

The coupling may include displaceable means for rupturing the frangible sealing means during connection of the coupling to establish said communication.

The coupling may include a coupling part having a locking member for coaction with another coupling part.

Preferably, a piercing member is provided within the coupling for rupturing the frangible sealing means. This coupling construction provides an inexpensive and effective device for quickly and effectively piercing the frangible sealing means in response to coupling of the supply conduit means to the reservoir or the master cylinder.

A method and hydraulic apparatus in accordance with the invention will now be described by way of example with reference to the accompanying drawings in which:-

Fig.1 is a perspective, schematic view of an hydraulic actuator apparatus employing the invention,

Fig.2 is an internal view of a portion of the master cylinder of the apparatus of Fig.1,

Fig.3 is a fragmentary view of the slave cylinder of the hydraulic actuator apparatus of Fig.1,

Fig.4 is a view within the circle 4 of Fig.1 showing a coupling for use in the hydraulic actuator apparatus of Fig.1,

Fig.5 is a further view of the coupling of Fig.4 shown in coupling relation to an associated reservoir,

Fig.6 is a perspective view of a lock member employed in the coupling of Figs.4 and 5,

Fig.7 is a fragmentary diagrammatic view of a modified form of the invention,

Fig.8 is a fragmentary diagrammatic view of a further modified form of the invention,

Fig.9 is a fragmentary view taken within the circle 9 of Fig.8, and

Figs.10 and 10a are fragmentary diagrammatic views of still further modified forms of the invention.

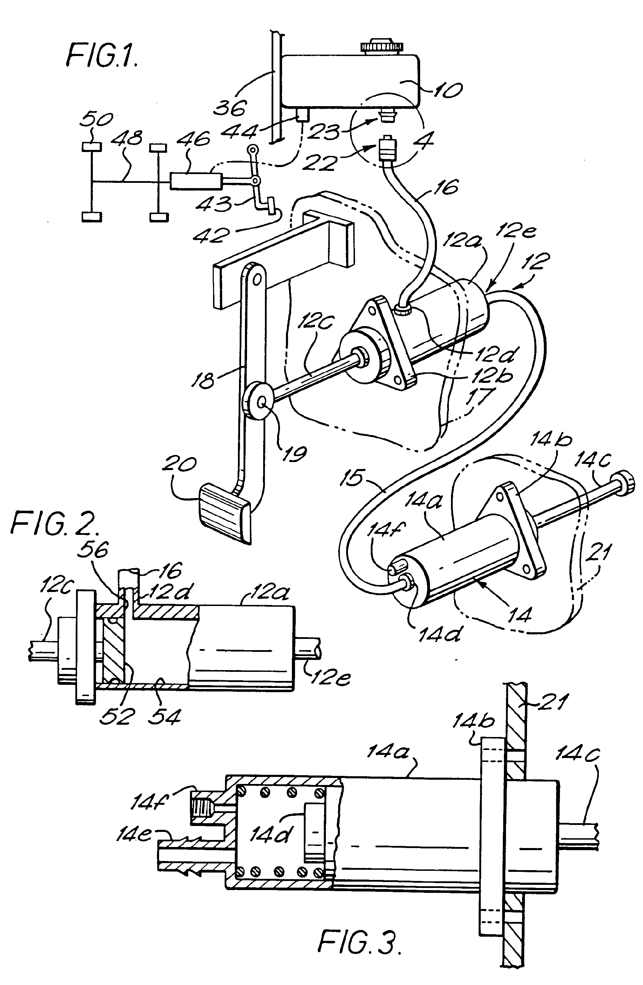

The hydraulic actuator apparatus of Fig.1 is designed for use with a reservoir 10 and includes a master cylinder 12, a slave cylinder 14, a working fluid conduit 15 interconnecting the master cylinder 12 and slave cylinder 14, and a supply conduit 16 connected to the inlet of master cylinder 12.

Master cylinder 12 is of known construction and includes a cylindrical housing 12a, a mounting flange 12b, a piston rod 12c connected to a piston 52 positioned within cylindrical housing 12a, a supply inlet 12d, and a working pressure fluid outlet 12e. It will be understood that master cylinder 12, supplied according to the invention as part of a fully operative hydraulic subassembly, is ultimately installed on a bulkhead 17 of a motor vehicle with a clutch pedal arm 18 pivotally connected at 19 to the free end of piston rod 12c, so that operator depression of clutch pedal 20 results in the discharge of hydraulic fluid under pressure from the outlet 12e of the master cylinder to deliver fluid through conduit 15 to the slave cylinder to operate the vehicular clutch mechanism.

It will be noted from Fig.2 that the fluid supply inlet 12d enters the fluid chamber 54 of the master cylinder immediately adjacent piston 52 when the piston is in the fully withdrawn position, i.e., the position which corresponds with a fully engaged clutch. As the piston 52 moves forward, it immediately closes the inlet 12d by closing a port 56 which cuts the pressurized fluid off from the unpressurized fluid in the reservoir and the supply line 16.

The slave cylinder 14 is of known construction and includes a main body cylindrical portion 14a, a mounting flange portion 14b, a piston rod 14c connected to a piston 14d, an inlet fitting 14e, and a bleed port 14f. It will be understood that the slave cylinder 14 is supplied to the automobile assembler as part of the fully operative, preassembly, prefilled hydraulic subassembly. Ultimately, the slave cylinder is installed on a bulkhead 21 of the vehicle and the free end of piston rod 14c is connected to the release lever or throwout bearing of the clutch assembly so that inward movement of piston rod 12c of master cylinder 12 in response to actuator depression of the clutch pedal 20 results in discharge of hydraulic fluid under pressure through the outlet 12e of the master cylinder for movement through conduit 15 to slave cylinder 14 where it acts to extend piston rod 14c to disengage the clutch.

Conduit 15 is preferably formed of a plastic such as Nylon capable of withstanding high fluid pressure and extends between the outlet 12e of the master cylinder and the inlet 14e of the slave cylinder. Conduit 15 sealingly engages the outlet 12e of the hydraulic cylinder and sealingly engages the inlet 14e of the slave cylinder so as to form a continuous high pressure hydraulic link system extending from the working pressure fluid chamber 54 of the master cylinder to the slave cylinder.

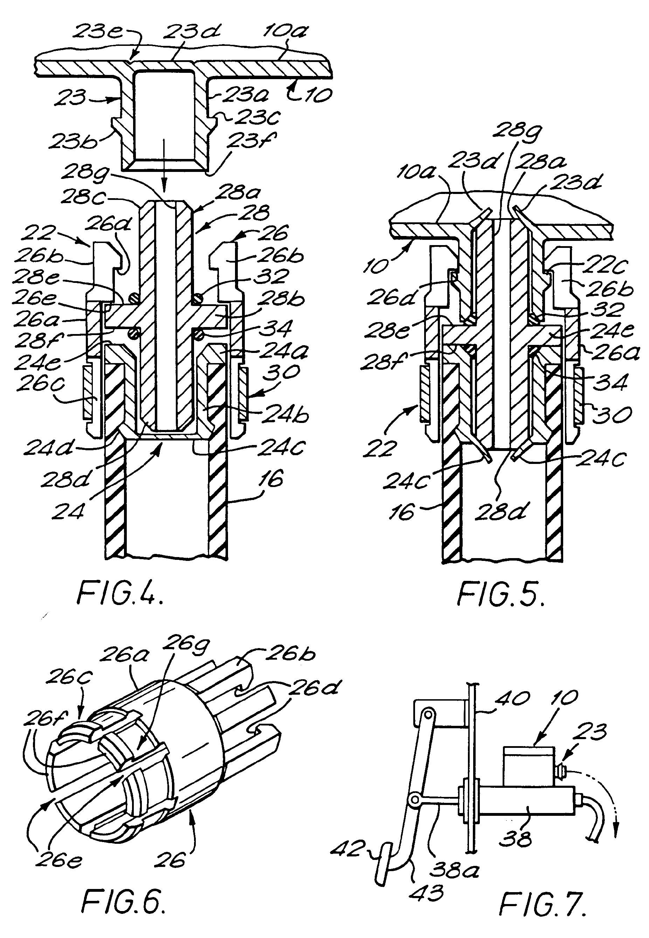

Conduit 16 is preferably formed of rubber and is sealingly secured at its lower end to inlet 12d of master cylinder 12. The upper or free end of conduit 16 is provided with coupling means 22 which provides a seal for the prefilled hydraulic actuator when assembled at the factory and which coacts with an outlet fitting 23 on the reservoir 10 when finally installed in the vehicle. Coupling means 22 is seen in detail in Figs.4 and 5.

Coupling means 22 includes a bung plug 24, a locking member 26 and a piercing member 28.

Bung plug 24 is formed of a suitable plastic material and includes a rim portion 24a, a cylindrical main body portion 24b, and a bottom portion 24c forming a bung partition. Bung plug 24 is inserted into the free open end of hose 16 to seat rim portion 24a against the annular free end of the hose. Bung plug 24 is held firmly in position within the end of the hose by the frictional engagement of external teeth or serrations 24d on the bung plug with the interior circumferential surface of the hose.

Locking member 26 is formed of a suitable plastic material and includes a cylindrical main body portion 26a, a plurality of latch fingers 26b, and an attachment portion 26c. Latch fingers 26b extend forwardly from main body portion 26a in circumferentially spaced relation. Each finger extends inwardly at its forward or free end to define a latch shoulder 26d. Attachment portion 26c includes a plurality of axially extending and circumferentially spaced slots 26e which divide attachment portion 26c into a plurality of circumferentially spaced segments 26f extending rearwardly from main body portion 26a in circumferentially spaced relation. Each section 26f is configured at its exterior to define a recess 26g and the recesses 26g of the plurality of circumferentially spaced sections 26f coact to define a circumferential groove. Locking member 26 is fitted over the free end of hose 16 in surrounding relation to bung plug 24 and is secured to the free end of the hose by a suitable circular clamp or clip 30 formed of plastic or the like. Clamp 30 seats in recesses 26g of sections 26f and clampingly secures the attachment portion 26c of the locking member to the free end of the hose.

Piercing member 28 may be formed, for example, of aluminium and includes a central main body hollow cylindrical portion 28a and a flange portion 28b. Flange portion 28b is positioned midway between the forward and rearward ends of main body portion 28a and divides main body portion 28a into a forward end portion 28c and a rearward end portion 28d. Piercing member 28 is positioned concentrically within locking member 26 with the rear end portion 28d of the main body portion positioned within the hollow of bung plug 24 and front end portion 28c projecting forwardly beyond the forward extend of latch fingers 26b of locking member 26. Flange member 28b slidably engages the inner circumferential wall of main body portion 26a of locking member 26 and the forward and rearward travel of piercing member 28 relative to locking member 26 is defined respectively by shoulders 26e defined at the juncture of latch fingers 26b and the main body portion 26a of locking member 26 and by the forward annular face 24e of rim portion 24a of bung plug 24. A first 0-ring 32 encircles main body front end portion 28c adjacent and forward annular face 28e of piercing member flange portion 28b, and a second 0-ring 34 encircles piercing member rear end portion 28d adjacent the rear annular face 28f of piercing member flange portion 28b.

Reservoir 10, as seen in Fig.1, may be secured to a bulkhead or frame structure 36 of the associated vehicle or, as seen in Fig.7, may comprise a reservoir formed integrally with a brake master cylinder unit 38 suitably secured to a vehicular bulkhead 40 and actuated in known manner by a brake pedal 42 carried by a pivotal brake pedal arm 43 pivotally secured to the piston rod 38a of the brake master cylinder. In either arrangement, the reservoir defines an outlet fitting 23 for coaction with the invention coupling means 22.

In the case of a separate remote reservoir as seen in Fig.1, the outlet fitting 23 may be provided on the lower wall of the reservoir and a further outlet fitting 44 may be provided for connection in known manner to the master cylinder 46 of the vehicular braking system by a suitable conduit. Brake master cylinder 46 is in turn connected in known manner by hydraulic conduits 48 to the wheel slave cylinders 50 and is actuated in known manner by a brake pedal 42 carried by a pivotal brake pedal arm 43 pivotally connected to the piston rod 46a of the brake master cylinder.

In the arrangement of Fig.7 in which the reservoir is integral with the brake master cylinder, the reservoir 10 communicates at its lower end in known manner with the interior of the brake master cylinder 38, and the outlet fitting 23 may be provided on a side wall of the reservoir.

In either arrangement, outlet fitting 23 comprises a hollow cylindrical portion or section 23a formed integrally with or attached to the main body of the reservoir, an external flange 23b on cylindrical portion 23a and defining a locking shoulder 23c, and a reduced thickness bung partition 23d formed integrally with the wall 10a of the reservoir and weakened as by scoring 23e extending around the outer periphery of the bung partition.

In the use of the invention method and apparatus of Figs.1-7, the combination of master cylinder 12, slave cylinder 14, working pressure conduit 15 and low-pressure supply conduit 16 are assembled. Piston 52 is positioned to open the port 56 to supply conduit 16 and the entire assembly is filled with fluid and bled to eliminate trapped air. Vacuum filling is preferred but not essential. Bleed port 14f of slave cylinder 14 is sealed, and coupling 22 is installed to seal the free end of conduit 16. The prefilled, preassembled unit is tested and packaged for transportation to the automobile assembly site.

At the assembly site, a reservoir 10 is installed in the motor vehicle at a work station, either as a separate unit as seen in Fig.1 or as part of the master cylinder of the brake system as seen in Fig.7. Thereafter, the brake system of the vehicle is bled and filled in known manner. Thereafter, the hydraulic actuating apparatus of the invention, comprising master cylinder 12, slave cylinder 14, conduit 15, and conduit 16, is connected to the reservoir 10 at the fitting 23 to provide a clutch actuator mechanism.

Specifically, after reservoir 10 has been installed either as a separate unit or as an integral part of the brake master cylinder and the braking system has been bled and filled, master cylinder 12 is suitably secured to bulkhead it slave cylinder 14 is suitably secured to bulkhead 21, and coupling means 22 on the free end of conduit 16 is connected to reservoir outlet fitting 23 to pierce bung partitions 24c and 23d and establish fluid communication between the prefilled hydraulic reservoir and the prefilled hydraulic actuating assembly.

As seen in Figs.4 and 5, as coupling means 22 is moved into engagement with outlet fitting 23, piercing member front end portion 28c moves into engagement with bung partition 23d so that, at this point of partial connection, piercing member front end portion 28c is in abutting engagement with bung partition 23d and piercing member rear end portion 28d is in abutting engagement with bung partition 24c. As the coupling is moved to its fully latched position with respect to the outlet fitting as seen in Fig.4, piercing member front end portion 28c bursts through bung partition 23d and piercing member rear end portion 28d bursts through bung partition 24c so as to establish fluid communication between hose 18 and the interior of the reservoir through the hollow central through-bore 28g in the piercing member. As the coupling 20 reaches its fully latched position with respect to outlet fitting 22, latch fingers 26b move flexibly over flange 23b of the outlet fitting and then snap into their latched positions as seen in Fig.5 in which finger shoulders 26d coact with flange shoulder 23c to preclude removal of the coupling from the reservoir. In the fully latched position, flange portion 28b of the piercing member is clamped between the annular outer edge 23f of fitting 22 and the front annular surface 24e of rim portion 24a of the bung plug, 0-ring 32 is sealingly compressed between outlet fitting annular surface 23f and annular surface 28e on the flange portion of the piercing member to preclude leakage of fluid from the interior of the reservoir to the exterior of the coupling, and 0-ring 34 is sealingly compressed between bung plug rim portion 24a and the rear face 28f of the flange member of the piercing member to preclude leakage of hydraulic fluid from the interior of hose 16 to the exterior of the coupling.

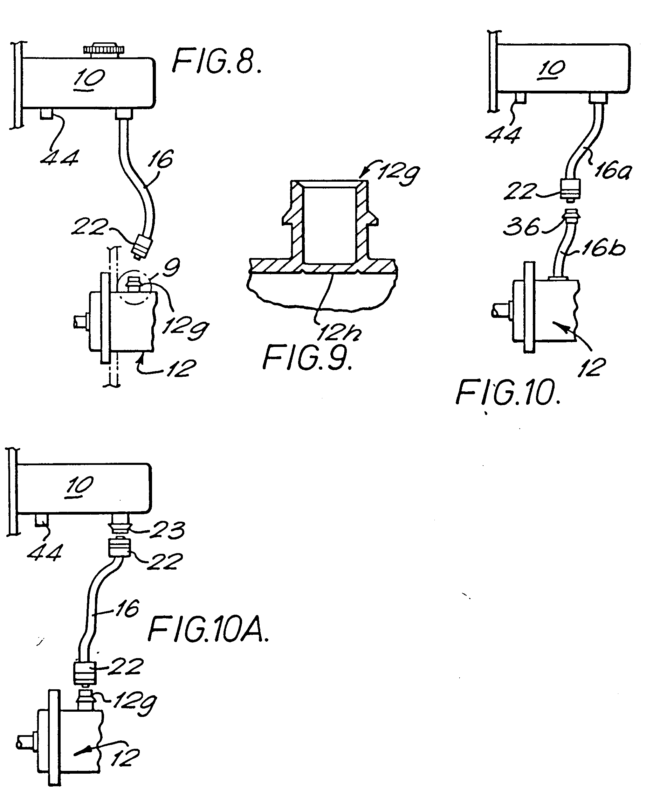

In the modified form of the invention seen in Figs.8 and 9, the supply conduit 16 is fixedly connected to an outlet on reservoir 10 and the coupling means 22 is provided on the lower free end of conduit 16 for coaction with an inlet fitting 12g on master cylinder 12. Inlet fitting 12g corresponds structurally and functionally to reservoir outlet fitting 23 in the Fig.1-6 embodiment and coacts with coupling means 22 to establish fluid communication between line 16 and the interior of master cylinder 12 in response to connection of coupling means 22 to fitting 12g. Specifically, as coupling means 22 is fitted onto fitting 12g piercing member 28 of the coupling means operates to pierce bung partition 24c of the coupling means and to simultaneously pierce bung partition 12h of fitting 12g.

In the use of the Fig.8 and 9 embodiment, the combination of master cylinder 12, slave cylinder 14 and working pressure conduit 15 are assembled but without fitting 36, the assembly is bled and filled with fluid and fitting 36 is secured to the free end of supply conduit half 16b to seal that conduit. The prefilled, preassembled unit is tested and packaged for transportation to the automobile assembly site.

At the assembly site, reservoir 10 is installed in the motor vehicle at a work station with conduit 16 attached in a dangling fashion. The reservoir 10 is connected at fitting 44 to the vehicular brake system, and the reservoir, brake system, and conduit 16 are filled with fluid with bung partition 24c of coupling 22 sealing the lower dangling end of line 16.

Thereafter, master cylinder 12 is suitably secured to bulkhead 17, slave cylinder 14 is suitably secured to bulkhead 21, and coupling means 22 on the free end of conduit 16 is connected to master cylinder inlet fitting 12g to pierce bung partitions 24c and 12h and establish fluid communication between the prefilled hydraulic reservoir assembly and the prefilled hydraulic actuating assembly.

In the modified form of the invention seen in Fig.10, supply conduit 16 comprises two halves or sections 16a and 16b. Half 16a is sealingly secured at its upper end to an outlet fitting on reservoir 10 and includes a coupling 22 sealing its lower end. Half 16b is sealingly secured at its lower end to the inlet fitting 12d of the master cylinder 12 and is sealed at its upper or free end by a fitting 36 corresponding in all essential details to the fitting 23 of the Fig.1 embodiment and the fitting 12g of the Fig.8 embodiment.

In the use of the Fig.10 embodiment, the combination of master cylinder 12, slave cylinder 14, working pressure conduit 15, and supply conduit half 16b are assembled but without fitting 36, the assembly is bled and filled with fluid, and fitting 36 is secured to the free end of supply conduit half 16b to seal that conduit. The prefilled, preassembled unit is tested and packaged for transportation to the automobile assembly site.

At the assembly site, a reservoir 10 is installed in the motor vehicle at a workstation with conduit half 16a attached in dangling fashion to the reservoir and with its lower end sealed by coupling 22. The reservoir 10 is connected at fitting 44 to the vehicular brake system, and the reservoir, brake system, and conduit half 16a are filled with fluid with bung partition 24c of coupling 22 sealing the lower dangling end of supply conduit half 16a.

Thereafter, master cylinder 12 is suitably secured to bulkhead 17, slave cylinder 14 is suitably secured to bulkhead 21, and coupling means 22 on the free end of supply conduit half 16a is connected to coupling 36 on the free end of supply conduit half 16b to pierce bung partitions 24c and the partition provided by fitting 36 and establish fluid communication between the prefilled hydraulic reservoir assembly and the pre-filled hydraulic actuating assembly.

Fig.10a shows a variation in which the conduit 16 is provided with coupling 22 means sealing each end. The coupling means 22 can be coupled to an outlet fitting 12g on the master cylinder and to fitting 23 on the reservoir after pre-filling the conduit.

Instead of using a fracture or piercing type coupling 22, the coupling may be of a leak-proof self-sealing quick connect type. Such a connector comprises a female connector half having a bore capable of slidably accepting a cylindrical peripheral surface of a male connector-half. A releasable retainer clip is provided in the female member which retains the male member in position after it has been inserted into the female member. The male and female coupling halves include movable valve members which, on interconnection of the male and female members, cooperate sealingly to open a fluid flow path through the member with little, if any loss of hydraulic fluid.

The quick connect coupling can be used in any of the embodiments shown, the respective coupling halves taking the place of the coupling 22 and fitting 23 in Fig.1, the coupling 22 and fitting 12g in Fig.8, the coupling 22 and fitting 36 in Fig.10, and coupling 22 and fitting 23/coupling 22 and fitting 12g in Fig.10a.

In each case where the quick connect coupling is used in place of the fracture type coupling, it will be apparent that the apparatus may be readily disassembled for repair or replacement purposes without loss of fluid by simply releasing the retainer clip and disconnecting the coupling male and female halves.

It will be seen that the invention provides a method and apparatus for quickly and efficiently providing an hydraulic actuating system in a motor vehicle of the type in which a reservoir for hydraulic fluid is already available, either as a separate common reservoir to supply two or more hydraulic onboard systems or as a captive reservoir formed integrally with the master cylinder of the existing brake system. In either situation, the complete hydraulic clutch actuator assembly is quickly and efficiently provided in the assembly process of the motor vehicle simply by attaching a suitable coupling to an outlet fitting of the prefilled common reservoir, or by attaching a suitable coupling to an inlet fitting of the prefilled hydraulic actuator assembly, or by coupling together the free ends of conduit halves connected respectively to the reservoir outlet fitting and the actuator assembly inlet fitting.

## Claims

1. A method of providing a hydraulic actuator assembly in a motor vehicle comprising the steps of installing in the motor vehicle a reservoir (10) having an outlet port (23), installing in the motor vehicle a hydraulic master cylinder (12) having an outlet (12e) for connection to a slave cylinder (14) through a working fluid conduit (15) and an inlet port (12d) for connection to the outlet port (23) of the reservoir (10), providing supply conduit means (16; 16a, 16b) to establish fluid communication between said ports (12d, 23), said supply conduit means (16; 16a, 16b) including sealing means (24) for sealing a free end thereof, and connecting said supply conduit means (16; 16a, 16b) between the inlet and outlet ports (12d, 23) so as to cause the sealing means to open and permit fluid in the reservoir to communicate between the ports (12d, 23).

2. A method according to Claim 1 characterised by pre-filling the master cylinder (12), working fluid conduit (16; 16a, 16b) and slave cylinder (14) with hydraulic fluid to form a sub-assembly for connection to the reservoir (10).

3. A method according to Claim 1 or 2 characterised by providing said supply conduit means (16) as a supply conduit sealingly connected at one end to one of said ports (12d; 23) and sealed at its other free end and establishing communication between said ports (23, 12d) by connecting said free end of said supply conduit (16) to the other of said ports (23; 12d).

4. A method according to Claim 3 characterised in that said free end of said supply conduit (16) is sealed by a coupling (22) and the coupling operates to open the free end of the supply conduit (16) in response to connection of the coupling to said other port (23; 12d).

5. A method according to Claim 4 characterised in that said other port (23; 12d)is closed prior to connection of said coupling (22) thereto and said coupling (22) also operates to open said other port (23; 12d) in response to connection of a coupling to said other port.

6. A method according to Claim 3, 4 or 5 characterised in that said one port is said master cylinder port (12d) and said other port is said reservoir port (23).

7. A method according to Claim 3, 4 or 5 characterised in that said one port is said reservoir port (23) and said other port is said master cylinder port (12d)

8. A method according to Claim 1 or 2 characterised by providing said supply conduit means as a first supply conduit (16b) sealingly connected at one end to said master cylinder input port (12d) and sealed at its other free end and a second supply conduit (16a) sealingly connected at one end to said reservoir outlet port (23) and sealed at its other free end and establishing fluid communication between said ports (12d, 23) by connecting together the free ends of said first and second supply conduits (16a, 16b).

9. A method according to Claim 8 characterised by providing a coupling member (22, 36) on the free end of each of said supply conduits (16a, 16b), the coupling members (22, 36) being normally operative to seal the free ends of the respective conduits (16a, 16b) but operative in response to connection of the free conduit ends to open the free ends and provide fluid communication therethrough.

10. A method according to Claim 1 or 2 characterised by providing said supply conduit means (16) as a supply conduit sealingly connectable at one end to said reservoir port (23) and sealingly connectable at its other end to said master cylinder port (12d) and establishing fluid communication between said ports by connecting the free ends of the conduit to the respective ports.

11. A method according to Claim 10 characterised by providing a coupling member (22) on each end of the supply conduit (16), the coupling members (22) being normally operative to seal the free ends of the conduit (16) but operative in response to connection of the free ends to open the free ends and provide fluid communication therethrough.

12. A method according to any preceding claim characterised by causing the sealing means (24) to open simultaneously with the connecting of the free end to establish said fluid communication between the ports (12b, 23).

13. A method according to Claim 12 characterised in that the sealing means (24) is frangible and ruptures during connection of the supply conduit means (16) to establish said fluid communication, or is formed in part of a quick-connect self sealing connector which includes self sealing valve means.

14. A method according to any preceding claim characterised in that where the method includes pre-filling the master cylinder (12), slave cylinder (14) and working fluid conduit (15), the method further includes pre-filling the supply conduit means (16; 16a, 16b).

15. A method according to any preceding Claim characterised by providing said reservoir (10) as a common reservoir which also serves as a reservoir for another hydraulic system of the motor vehicle.

16. Hydraulic actuator apparatus for assembly into a motor vehicle by a method according to any preceding Claim, the hydraulic apparatus comprising a hydraulic master cylinder (12) having an outlet (12e) for connection to a slave cylinder (14) through a working fluid conduit (15) and an inlet port (12d) for connection through supply conduit means (16, 16a, 16b) to an outlet (23) of a reservoir (10), said supply conduit means including sealing means (24) for sealing a free end thereof which sealing means (24) permits fluid in the reservoir to communicate between the ports (12d, 23) when the supply conduit means (16, 16a, 16b) is connected between the inlet and outlet ports (12d, 23).

17. Hydraulic actuator apparatus according to Claim 16 characterised in that where a frangible sealing means (24) is provided, the sealing means (24) is rupturable during connecting of said free end by a coupling (22) to establish said fluid communication between the ports (12d, 23).

18. Hydraulic actuator apparatus according to Claim 17 characterised in that the coupling (22) includes displaceable means (28) for rupturing the frangible sealing means (24) during connection of the coupling to establish said communication.

19. Hydraulic actuator apparatus according to Claim 17 or 18 characterised in that the coupling (22) includes a coupling part having a locking member (26) for coaction with another coupling part (23b).

20. A hydraulic actuator apparatus according to any of Claims 17 to 19 characterised in that a piercing member (28) is provided within the coupling (22) for rupturing the frangible sealing means (24).

**Patentansprüche**

1. Verfahren zum Schaffen eines hydraulischen Betätigungsvorrichtungsaufbaus in einem Kraftfahrzeug, mit den Schritten: Einbauen eines Vorratsbehälters (10), der eine Auslaßöffnung (23) hat, in das Kraftfahrzeug, Einbauen eines hydraulischen Geberzylinders (12) in das Kraftfahrzeug, der einen Auslaß (12e) zum Anschluß an einen Nehmerzylinder (14) über eine Arbeitsflüssigkeitsleitung (15) und eine Einlaßöffnung (12d) zum Anschluß an die Auslaßöffnung (23) des Vorratsbehälters (10) hat, Bereitstellen einer Versorgungsleitungseinrichtung (16; 16a, 16b), um eine Flüssigkeitsverbindung zwischen den Öffnungen (12d, 23) herzustellen, wobei die Versorgungsleitungseinrichtung (16; 16a, 16b) eine Dichtungseinrichtung (24) zum Abdichten eines freien Endes von ihr aufweist, und Verbinden der Versorgungsleitungseinrichtung (16; 16a, 16b) mit der Einlaß- und Auslaßöffnung (12d, 23), um zu bewirken, daß sich die Dichtungseinrichtung öffnet, und zu gestatten, daß Flüssigkeit im Vorratsbehälter zwischen den Öffnungen (12d, 23) strömen kann.

2. Verfahren nach Anspruch 1, gekennzeichnet durch Vorbefüllen des Geberzylinders (12), der Arbeitsflüssigkeitsleitung (16; 16a, 16b) und des Nehmerzylinders (14) mit Hydraulikflüssigkeit, um einen Teilaufbau zum Anschluß an den Vorratsbehälter (10) zu bilden.

3. Verfahren nach Anspruch 1 oder 2, gekennzeichnet durch Bereitstellen der Versorgungsleitungseinrichtung (16) als eine Versorgungsleitung, die an einem Ende dicht an eine der Öffnungen (12d; 23) angeschlossen und an ihrem anderen freien Ende verschlossen ist, und Herstellen einer Verbindung zwischen den Öffnungen (23, 12d) durch Anschließen des freien Endes der Versorgungsleitung (16) an die andere der Öffnungen (23; 12d).

4. Verfahren nach Anspruch 3, dadurch gekennzeichnet, daß das freie Ende der Versorgungsleitung (16) durch eine Kupplung (22) verschlossen ist und die Kupplung bewirkt, daß das freie Ende der Versorgungsleitung (16) infolge des Anschlusses der Kupplung an die andere Öffnung (23; 12d) öffnet.

5. Verfahren nach Anspruch 4, dadurch gekennzeichnet, daß die andere Öffnung (23; 12d) vor dem Anschluß der Kupplung (22) an sie geschlossen wird, und daß die Kupplung (22) auch bewirkt, daß die andere Öffnung (23; 12d) infolge des Anschlusses einer Kupplung an die andere Öffnung geöffnet wird.

6. Verfahren nach Anspruch 3, 4 oder 5, dadurch gekennzeichnet, daß die eine Öffnung die Geberzylinderöffnung (12d) und die andere Öffnung die Vorratsbehälteröffnung (23) ist.

7. Verfahren nach Anspruch 3, 4 oder 5, dadurch gekennzeichnet, daß die eine Öffnung die Vorratsbehälteröffnung (23) und die andere Öffnung die Geberzylinderöffnung (12d) ist.

8. Verfahren nach Anspruch 1 oder 2, gekennzeichnet durch Bereitstellen der Versorgungsleitungseinrichtung als eine erste Versorgungsleitung (16b), die an einem Ende dicht an die Geberzylindereinlaßöffnung (12d) und an ihrem anderen freien Ende verschlossen ist, und eine zweite Versorgungsleitung (16a), die an einem Ende dicht an die Vorratsbehälterauslaßöffnung (23) angeschlossen und an ihrem anderen freien Ende verschlossen ist, und Herstellen einer Flüssigkeitsverbindung zwischen den Öffnungen (12d, 23) durch aneinander Anschließen der freien Enden der ersten und zweiten Versorgungsleitung (16a, 16b).

9. Verfahren nach Anspruch 8, gekennzeichnet durch Bereitstellen eines Kupplungsteiles (22, 36) an dem freien Ende einer jeden Versorgungsleitung (16a, 16b), wobei die Kupplungsteile (22, 36) normalerweise bewirken, daß die freien Enden der jeweiligen Leitungen (16a, 16b) verschlossen sind, aber infolge des Zusammenschlusses der freien Leitungsenden bewirken, daß sich die freien Enden öffnen, und eine durch sie gehende Flüssigkeitsverbindung hergestellt wird.

10. Verfahren nach Anspruch 1 oder 2, gekennzeichnet durch Bereitstellen der Versorgungsleitungseinrichtung (16) als eine Versorgungsleitung, die an einem Ende dicht an die Vorratsbehälteröffnung (23) anschließbar und an ihrem anderen Ende dicht an die Geberzylinderöffnung (12d) anschließbar ist, und Herstellen einer Flüssigkeitsverbindung zwischen den Öffnungen durch Anschließen der freien Enden der Leitung an die jeweiligen Öffnungen.

11. Verfahren nach Anspruch 10, gekennzeichnet durch Bereitstellen eines Kupplungsteiles (22) an jedem Ende der Versorgungsleitung (16), wobei die Kupplungsteile (22) normalerweise bewirken, daß die freien Enden der Leitung (16) verschlossen sind, aber infolge des Anschlusses der freien Enden bewirken, daß sich die freien Enden öffnen, und eine durch sie gehende Flüssigkeitsverbindung geschaffen wird.

12. Verfahren nach irgendeinem vorhergehenden Anspruch, gekennzeichnet durch Bewirken, daß sich die Dichtungseinrichtung (24) gleichzeitig mit dem Anschließen der freien Enden öffnet, um die Flüssigkeitsverbindung zwischen den Öffnungen (12b, 23) herzustellen.

13. Verfahren nach Anspruch 12, dadurch gekennzeichnet, daß die Dichtungseinrichtung (24) zerbrechlich ist und während des Anschlusses der Versorgungsleitung (16) zerbricht, um die Flüssigkeitsverbindung herzustellen, oder zum Teil als selbstdichtende Schnellverbindungskupplung ausgebildet ist, die eine selbstdichtende Ventileinrichtung beinhaltet.

14. Verfahren nach irgendeinem der vorhergehenden Ansprüche, dadurch gekennzeichnet, daß, wenn das Verfahren das Vorbefüllen des Geberzylinders (12), des Nehmerzylinders (14) und der Arbeitsflüssigkeitsleitung (15) beinhaltet, das Verfahren außerdem das Vorbefüllen der Versorgungsleitungseinrichtung (16; 16a, 16b) beinhaltet.

15. Verfahren nach irgendeinem vorhergehenden Anspruch, gekennzeichnet durch Bereitstellen des Vorratsbehälters (10) als einen gemeinschaftlichen Vorratsbehälter, der auch als Vorratsbehälter für ein weiteres Hydrauliksystem des Kraftfahrzeugs dient.

16. Hydraulische Betätigungsvorrichtung zum Einbau in ein Kraftfahrzeug durch ein Verfahren nach irgendeinem vorhergehenden Anspruch, wobei die hydraulische Vorrichtung folgendes aufweist: einen hydraulischen Geberzylinder (12), der einen Auslaß (12e) zum Anschluß an einen Nehmerzylinder (14) über eine Arbeitsflüssigkeitsleitung (15) und eine Einlaßöffnung (12d) zum Anschluß über eine Versorgungsleitungseinrichtung (16, 16a, 16b) an einen Auslaß (23) eines Vorratsbehälters hat, wobei die Versorgungsleitungseinrichtung eine Dichtungseinrichtung (24) beinhaltet, um ein freies Ende von ihr zu verschließen, wobei die Dichtungseinrichtung (24) es gestattet, daß Flüssigkeit in dem Vorratsbehälter zwischen den Öffnungen (12d, 23) strömen kann, wenn die Versorgungsleitungseinrichtung (16, 16a, 16b) an die Einlaß- und Auslaßöffnung (12d, 23) angeschlossen ist.

16. Hydraulische Betätigungsvorrichtung nach Anspruch 16, dadurch gekennzeichnet, daß, wenn eine zerbrechliche Dichtungseinrichtung (24) vorgesehen ist, die Dichtungseinrichtung (24) während des Anschließens des freien Endes durch eine Kupplung (22) zerbrechbar ist, um die Flüssigkeitsverbindung zwischen den Öffnungen (12d, 23) herzustellen.

18. Hydraulische Betätigungsvorrichtung nach Anspruch 17, dadurch gekennzeichnet, daß die Kupplung (22) eine verschiebbare Einrichtung (28) beinhaltet, um die zerbrechliche Dichtungseinrichtung (24) während des Anschlusses der Kupplung zu zerbrechen, um die Verbindung herzustellen.

19. Hydraulische Betätigungsvorrichtung nach Anspruch 17 oder 18, dadurch gekennzeichnet, daß die Kupplung (22) einen Kupplungsteil beinhaltet, der ein Verriegelungsglied (26) zum Zusammenwirken mit einem weiteren Kupplungsteil 823b) hat.

20. Hydraulische Betätigungsvorrichtung nach einem der Ansprüche 17 bis 19, dadurch gekennzeichnet, daß ein Durchstechteil (28) in der Kupplung (22) vorgesehen ist, um die zerbrechliche Dichtungseinrichtung (24) zu zerbrechen.

**Revendications**

1. Procédé de réalisation d'un circuit hydraulique de manoeuvre dans un véhicule à moteur, comprenant les étapes d'installation, dans le véhicule à moteur, d'un réservoir (10) ayant un orifice de sortie (23), d'installation, dans le véhicule à moteur, d'un maître-cylindre hydraulique (12) ayant une sortie (12e) destinée à être raccordée à un cylindre récepteur (14) par un conduit (15) de fluide de travail et un orifice d'entrée (12d) destiné à être raccordé à l'orifice de sortie (23) du réservoir (10), de disposition d'un conduit d'alimentation (16 ; 16a, 16b) destiné à établir la communication pour la circulation du fluide entre les orifices (12d, 23), le conduit d'alimentation (16; 16a, 16b) comprenant un dispositif (24) d'étanchéité pour la fermeture étanche d'une extrémité libre du conduit, et de raccordement du conduit d'alimentation (16 ; 16a ; 16b) entre les orifices d'entrée et de sortie (12d, 23) afin que le dispositif d'étanchéité s'ouvre et permette la communication du fluide présent dans le réservoir entre les orifices (12d, 23).

2. Procédé selon la revendication 1, caractérisé par le remplissage préalable du maître-cylindre (12), du conduit (16 ; 16a, 16b) de fluide de travail et du cylindre récepteur (14) avec du fluide hydraulique afin qu'ils forment un sous-ensemble destiné à être raccordé au réservoir (10).

3. Procédé selon la revendication 1 ou 2, caractérisé par la disposition du conduit d'alimentation (16) sous forme d'un conduit raccordé de manière étanche à une première extrémité à un premier des orifices (12d ; 23) et fermé de manière étanche à son extrémité libre, et par l'établissement de la communication pour la circulation du fluide entre les orifices (23, 12d) par raccordement de l'extrémité libre du conduit d'alimentation (16) à l'autre des orifices (23 ; 12d).

4. Procédé selon la revendication 3, caractérisé en ce que l'extrémité libre du conduit d'alimentation (16) est fermée de manière étanche par un raccord (22), et le raccord ouvre l'extrémité libre du conduit d'alimentation (16) à la suite de la connexion du raccord à l'autre orifice (23 ; 12d).

5. Procédé selon la revendication 4, caractérisé en ce que l'autre orifice (23 ; 12d) est fermé avant la connexion du raccord (22) à cet orifice, et le raccord (22) assure aussi l'ouverture de l'autre orifice (23 ; 12d) à la suite de la connexion d'un raccord à l'autre orifice.

6. Procédé selon la revendication 3, 4 ou 5, caractérisé en ce que le premier orifice est l'orifice (12d) du maître-cylindre et l'autre orifice est l'orifice (23) du réservoir.

7. Procédé selon la revendication 3, 4 ou 5, caractérisé en ce que le premier orifice est l'orifice (23) du réservoir, et l'autre orifice est l'orifice (12d) du maître-cylindre.

8. Procédé selon la revendication 1 ou 2, caractérisé par la disposition du conduit d'alimentation sous forme d'un premier conduit d'alimentation (16b) raccordé de manière étanche à une première extrémité à l'orifice (12d) d'entrée du maître-cylindre et fermé de manière étanche à son autre extrémité libre, et d'un second conduit d'alimentation (16a) raccordé de manière étanche à une première extrémité à l'orifice (23) de sortie du réservoir et fermé de manière étanche à son autre extrémité libre, et par l'établissement de la communication pour la circulation du fluide entre les orifices (12d, 23) par raccordement l'une à l'autre des extrémités libres du premier et du second conduit d'alimentation (16a, 16b).

9. Procédé selon la revendication 8, caractérisé par la disposition d'un organe de raccordement (22, 36) à l'extrémité libre de chacun des conduits d'alimentation (16a, 16b), les organes de raccordement (22, 36) assurant normalement la fermeture étanche des extrémités libres des conduits respectifs (16a, 16b), mais, à la suite de la connexion des extrémités libres des conduits, provoquant l'ouverture des extrémités libres et assurant la communication qui permet la circulation du fluide entre eux.

10. Procédé selon la revendication 1 ou 2, caractérisé par la disposition du conduit d'alimentation (16) sous forme d'un conduit d'alimentation qui peut être raccordé de manière étanche à une première extrémité à l'orifice (23) du réservoir et qui peut être raccordé de manière étanche à l'autre extrémité à l'orifice (12d) du maître-cylindre, et par établissement d'une communication pour la circulation du fluide entre les orifices par connexion des extrémités libres du conduit aux orifices respectifs.

11. Procédé selon la revendication 10, caractérisé par la disposition d'un organe de raccordement (22) à chaque extrémité du conduit (16) d'alimentation, les organes de raccordement (22) assurant normalement la fermeture étanche des extrémités libres du conduit (16) mais, à la suite de la connexion des extrémités libres, provoquant l'ouverture des extrémités libres et permettant la communication pour la circulation du fluide entre elles.

12. Procédé selon l'une quelconque des revendications précédentes, caractérisé par l'ouverture des dispositifs d'étanchéité (24) simultanément au raccordement de l'extrémité libre destiné à établir la communication pour la circulation du fluide entre les orifices (12b, 23).

13. Procédé selon la revendication 12, caractérisé en ce que les dispositifs de fermeture étanche (24) sont cassables et se rompent lors de la connexion du conduit d'alimentation (16) afin qu'ils établissent la communication pour la circulation du fluide, ou sont formés en partie par un raccord rapide à fermeture étanche automatique qui comprend des clapets à fermeture étanche automatique.

14. Procédé selon l'une quelconque des revendications précédentes, caractérisé en ce que, lorsque le procédé comprend le remplissage préalable du maître-cylindre (12), du cylindre récepteur (14) et du conduit (15) de fluide de travail, le procédé comprend en outre le remplissage préalable du conduit d'alimentation (16 ; 16a, 16b).

15. Procédé selon l'une quelconque des revendications précédentes, caractérisé par la disposition du réservoir (10) sous forme d'un réservoir commun qui est aussi utilisé comme réservoir par un autre circuit hydraulique du véhicule à moteur.

16. Appareil hydraulique de manoeuvre destiné à être monté dans un véhicule à moteur par mise en oeuvre d'un procédé selon l'une quelconque des revendications précédentes, l'appareil hydraulique comprenant un maître-cylindre hydraulique (12) ayant une sortie (12e) destinée à être raccordée à un cylindre récepteur (14) par un conduit (15) de fluide de travail, et un orifice d'entrée (12d) destiné à être raccordé, par un conduit d'alimentation (16, 16a, 16b), à une sortie (23) d'un réservoir (10), le conduit d'alimentation comprenant un dispositif (24) de fermeture étanche d'une extrémité libre, ce dispositif de fermeture étanche (24) permettant la communication du fluide du réservoir afin qu'il circule entre les orifices (12d, 23) lorsque le conduit d'alimentation (16, 16a, 16b) est raccordé entre les orifices d'entrée et de sortie (12d, 23).

17. Appareil hydraulique de manoeuvre selon la revendication 16, caractérisé en ce que, lorsqu'il comporte un dispositif cassable de fermeture étanche (24), le dispositif (24) de fermeture peut être cassé pendant le raccordement de l'extrémité libre à l'aide d'un raccord (22) de manière que la communication soit établie entre les orifices (12d, 23) pour la circulation du fluide.

18. Appareil hydraulique de manoeuvre selon la revendication 17, caractérisé en ce que le raccord (22) comprend un dispositif mobile (28) destiné à casser le dispositif cassable de fermeture étanche (24) pendant le raccordement du raccord afin que la communication soit établie.

19. Appareil hydraulique de manoeuvre selon la revendication 17 ou 18, caractérisé en ce que le rac-

**EP 0 364 471 B1**

cord (22) comprend une partie de raccordement ayant un organe de blocage (26) destiné à coopérer avec une autre partie de raccord (23b).

20. Appareil hydraulique de manoeuvre selon l'une quelconque des revendications 17 à 19, caractérisé en ce qu'un organe de perçage (28) est disposé dans le raccord (22) afin qu'il casse le dispositif cassable de fermeture étanche (24).

FIG.1.

FIG.2.

FIG.3.

FIG.4.

FIG.5.

FIG.6.

FIG.7.

FIG.8.

FIG.9.

FIG.10.

FIG.10A.